# EUROPEAN PATENT APPLICATION

(11) **EP 4 604 604 A1**
(43) Date of publication of application: **20.08.2025**
(21) Application number: 25155842.5
(22) Date of filing: 04.02.2025
(51) Int. Cl.: H04W 24/10, H04W 48/20, H04W 76/27

(54) **METHODS AND APPARATUS FOR EARLY MEASUREMENT REPORTING**

(30) Priority: 16.02.2024 GB 202402197
(71) Applicant: Nokia Technologies Oy, 02610 Espoo (FI)
(72) Inventor: DIMNIK, Riikka Karoliina, 02880 Kirkkonummi (FI); KAINULAINEN, Jani-Pekka, Cottenham, CB24 8BA (GB); DALSGAARD, Lars, 90230 Oulu (FI); KARIMIDEHKORDI, Ali, 81545 Munich (DE)
(74) Representative: Script Intellectual Property LLP

(57) **Abstract**

A method and apparatus includes transitioning, by a user equipment (UE), from a connected mode to a first cell to an idle mode, The UE determines to store measurements performed by the UE in connected mode of one or more cells based upon a signal level or cell type, and stores for a predefined duration, measurements performed by the UE in connected mode of the one or more cells, upon entering the idle mode. The UE transmits, based on a criterion, during the predefined duration, the stored connected mode measurements of the one or more cells to a first apparatus in connection with connecting to the first apparatus.

## Description

### FIELD

Various example embodiments relate generally to wireless networks and, more particularly, to early measurement reporting.

### BACKGROUND

When a user equipment (UE) is configured with early measurement reporting (EMR), a cell may remain detectable when a UE is transitioning from a connected mode to an idle mode. When the UE is released to idle or inactive mode from the connected mode, the UE may have performed measurements (and reported them) during the connected mode for a cell that the UE is configured to measure when in idle/inactive mode.

In some cases, the UE may stay in idle/inactive mode for a very short time before it receives a radio resource control (RRC) connection setup message. In this case, the UE may not have sufficient time to measure enough samples during idle/inactive mode to be able to report the measurements at RRC connection setup/resume.

### SUMMARY

In an aspect of the present disclosure, a method includes transitioning, by a user equipment (UE), from a connected mode to a first cell to an idle mode, The UE determines to store measurements performed by the UE in connected mode of one or more cells based upon a signal level or cell type, and stores for a predefined duration, measurements performed by the UE in connected mode of the one or more cells, upon entering the idle mode. The UE transmits, based on a criterion, during the predefined duration, the stored connected mode measurements of the one or more cells to a first apparatus in connection with connecting to the first apparatus.

In an aspect of the method, the determining includes the UE determining based on the cell type being a serving cell or being a neighbor cell.

In an aspect of the method, the determining is based on the frequency range.

In an aspect of the method, the determining includes determining whether the measurements meet or exceed a threshold for early measurement reporting.

In an aspect of the method, the predefined duration includes storing the measurements until receiving a connect mode measurement and reporting configuration.

In an aspect of the method, the method includes initiating, by the UE, a counter upon entering idle mode or inactive mode.

In an aspect of the method, the counter is a timer and upon expiration of the timer or exceeding a counter, maintaining without transmitting, by the UE, the stored connected mode measurements.

In an aspect of the method, the timer expires after measuring, by the UE, at least one idle mode measurement or inactive mode measurement for a first cell of the one or more cell.

In an aspect of the method, the timer expires after a predefined time configured by the network or included in a message received from the first cell.

In an aspect of the method, the timer or counter measures a time that is longer than a period of a reference signal measured by the UE.

In an aspect of the method, the method includes discarding, by the UE, the stored connected mode measurements for the first cell.

In an aspect of the method, upon a commencement of a radio resource control (RRC) connection setup to the first apparatus while a timer is running, the method includes transmitting the stored connected mode measurements to the first apparatus.

In an aspect of the method, the transmitting of the connected mode measurements of the one or more cells includes transmitting measurements measured during the connected mode following being in idle mode or inactive mode.

In an aspect of the method, the transmitting includes transmitting of the connected mode measurements of the one or more cells includes transmitting measurements not previously transmitted.

In an aspect of the method, the criterion for transmitting of the connected mode measurements of the one or more cells is in response to receiving, by the UE, a request from the first apparatus.

In an aspect of the method, the method includes transmitting, by the UE, an indication of information on an accuracy of the transmitted connected mode measurements of the one or more cells, wherein the indication indicates a higher accuracy than in a case where the UE transmits idle mode measurements or inactive mode measurements.

In an aspect of the method, the predefined duration applies while one or more predefined conditions are fulfilled.

In an aspect of the present disclosure, a user equipment (UE) includes at least one processor, and at least one memory storing instructions which, when executed by the at least one processor, cause the UE at least to perform any of the foregoing methods.

In an aspect of the present disclosure, an apparatus includes at least one processor, and at least one memory storing instructions which, when executed by the at least one processor, cause the apparatus at least to perform any of the foregoing methods.

In an aspect of the present disclosure, a processor-readable medium storing instructions which, when executed by at least one processor of an apparatus, cause the apparatus at least to perform any of the foregoing methods.

According to some aspects, there is provided the subject matter of the independent claims. Some further aspects are defined in the dependent claims.

In an aspect of the present disclosure, a method includes transitioning, by a user equipment (UE), from a connected mode to a first cell to an idle mode or inactive mode. The UE stores, for a predefined duration, measurements performed by the UE in connected mode, of one or more cells, upon entering the idle mode or inactive mode, and transmits, during the predefined duration, the stored connected mode measurements of the one or more cells to a first apparatus in connection with connecting to the first apparatus.

In an aspect of the method, the method includes initiating, by the UE, a counter upon entering idle mode or inactive mode.

In an aspect of the method, the counter is a timer and upon expiration of the timer or exceeding a counter, maintaining without transmitting, by the UE, the stored connected mode measurements.

In an aspect of the method, the timer expires after measuring, by the UE, at least one idle mode measurement or inactive mode measurement for a first cell of the one or more cell.

In an aspect of the method, the timer expires after a predefined time configured by the network or included in a message received from the first cell.

In an aspect of the method, the timer or counter measures a time that is longer than a period of a reference signal measured by the UE.

In an aspect of the method, the method includes discarding, by the UE, the stored connected mode measurements for the first cell.

In an aspect of the method, upon a commencement of a radio resource control (RRC) connection setup to the first apparatus while the timer is running, the method includes transmitting the stored connected mode measurements to the first apparatus.

In an aspect of the method, the transmitting of the connected mode measurements of the one or more cells includes transmitting measurements measured during the connected mode following being in idle mode or inactive mode.

In an aspect of the method, the transmitting includes transmitting of the connected mode measurements of the one or more cells includes transmitting measurements not previously transmitted.

In an aspect of the method, the transmitting of the connected mode measurements of the one or more cells is in response to receiving, by the UE, a request from the first apparatus.

In an aspect of the method, the method includes transmitting, by the UE, an indication of information on an accuracy of the transmitted connected mode measurements of the one or more cells, wherein the indication indicates a higher accuracy than in a case where the UE transmits idle mode measurements or inactive mode measurements.

In an aspect of the method, the predefined duration applies while one or more predefined conditions are fulfilled.

In an aspect of the present disclosure, a user equipment (UE) includes at least one processor, and at least one memory storing instructions which, when executed by the at least one processor, cause the UE at least to perform any of the foregoing methods.

In an aspect of the present disclosure, an apparatus includes at least one processor, and at least one memory storing instructions which, when executed by the at least one processor, cause the apparatus at least to perform any of the foregoing methods.

In an aspect of the present disclosure, a processor-readable medium storing instructions which, when executed by at least one processor of an apparatus, cause the apparatus at least to perform any of the foregoing methods.

### BRIEF DESCRIPTION OF THE DRAWINGS

Some example embodiments will now be described with reference to the accompanying drawings.
FIG. 1 is a diagram of an example embodiment of wireless networking between a network system and a user equipment (UE), according to one illustrated aspect of the disclosure;
FIG. 2 is a diagram of example components of a network system, according to one illustrated aspect of the disclosure;
FIG. 3 is a flow diagram of an example method for early measurement reporting, according to one illustrated aspect of the disclosure;
FIG. 4 is a diagram of an example time based embodiment of the method of FIG. 3, according to one illustrated aspect of the disclosure; and
FIG. 5 is a diagram of an example embodiment of components of a UE or of a network apparatus, according to one illustrated aspect of the present disclosure.

### DETAILED DESCRIPTION

In the following description, certain specific details are set forth in order to provide a thorough understanding of disclosed aspects. However, one skilled in the relevant art will recognize that aspects may be practiced without one or more of these specific details or with other methods, components, materials, etc. In other instances, well-known structures associated with transmitters, receivers, or transceivers have not been shown or described in detail to avoid unnecessarily obscuring descriptions of the aspects.

Reference throughout this specification to "one aspect" or "an aspect" means that a particular feature, structure, or characteristic described in connection with the aspect is included in at least one aspect. Thus, the appearances of the phrases "in one aspect" or "in an aspect" in various places throughout this specification are not necessarily all referring to the same aspect. Furthermore, the particular features, structures, or characteristics may be combined in any suitable manner in one or more aspects.

Embodiments described in the present disclosure may be implemented in wireless networking apparatuses, such as, without limitation, apparatuses utilizing Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, enhanced LTE (eLTE), 5G New Radio (5G NR), 5G Advance, 6G (and beyond) and 802.11ax (Wi-Fi 6), among other wireless networking systems. The term 'eLTE' here denotes the LTE evolution that connects to a 5G core. LTE is also known as evolved UMTS terrestrial radio access (EUTRA) or as evolved UMTS terrestrial radio access network (EUTRAN).

The present disclosure may use the term "serving network device" to refer to a network node or network device (or a portion thereof) that services a UE. As used herein, the terms "transmit to," "receive from," and "cooperate with," (and their variations) include communications that may or may not involve communications through one or more intermediate devices or nodes. The term "acquire" (and its variations) includes acquiring in the first instance or reacquiring after the first instance. The term "connection" may mean a physical connection or a logical connection.

The present disclosure uses 5G NR as an example of a wireless network and may use smartphones and/or extended reality headsets as an example of UEs. It is intended and shall be understood that such examples are merely illustrative, and the present disclosure is applicable to other wireless networks and user equipment.

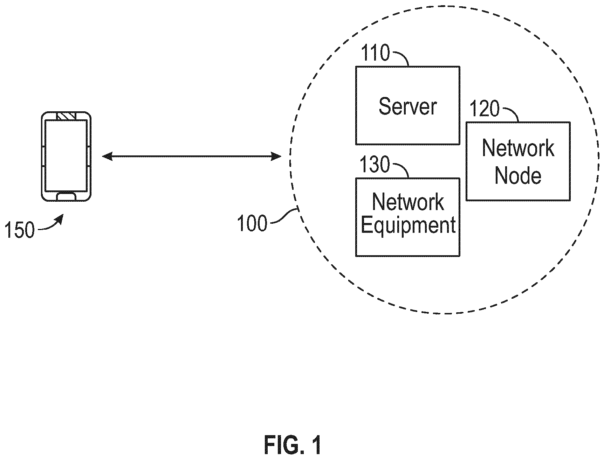

FIG. 1 is a diagram depicting an example of wireless networking between a network system 100 and a user equipment (UE) 150. The network system 100 may include one or more network nodes 120, one or more servers 110, and/or one or more network equipment 130 (e.g., test equipment). The network nodes 120 will be described in more detail below. As used herein, the term "network apparatus" may refer to any component of the network system 100, such as the server 110, the network node 120, the network equipment 130, any component(s) of the foregoing, and/or any other component(s) of the network system 100. Examples of network apparatuses include, without limitation, apparatuses implementing aspects of 5G NR, among others. The present disclosure describes embodiments related to 5G NR and embodiments that involve aspects defined by 3rd Generation Partnership Project (3GPP). However, it is contemplated that embodiments relating to other wireless networking technologies are encompassed within the scope of the present disclosure.

The following description provides further details of examples of network nodes. In a 5G NR network, a gNodeB (also known as gNB) may include, e.g., a node that provides new radio (NR) user plane and control plane protocol terminations towards the UE and that is connected via a NG interface to the 5G core (5GC), e.g., according to 3GPP TS 38.300 V16.6.0 (2021-06) section 3.2, which is hereby incorporated by reference herein.

A gNB supports various protocol layers, e.g., Layer 1 (L1) - physical layer, Layer 2 (L2), and Layer 3 (L3).

The layer 2 (L2) of NR is split into the following sublayers: Medium Access Control (MAC), Radio Link Control (RLC), Packet Data Convergence Protocol (PDCP) and Service Data Adaptation Protocol (SDAP), where, e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC quality of service (QoS) flows;
∘ Control channels include broadcast control channel (BCCH) and physical control channel (PCCH).

Layer 3 (L3) includes, e.g., radio resource control (RRC), e.g., according to 3GPP TS 38.300 V16.6.0 (2021-06) section 6, which is hereby incorporated by reference herein.

A gNB central unit (gNB-CU) includes, e.g., a logical node hosting, e.g., radio resource control (RRC), service data adaptation protocol (SDAP), and packet data convergence protocol (PDCP) protocols of the gNB or RRC and PDCP protocols of the en-gNB, that controls the operation of one or more gNB distributed units (gNB-DUs). The gNB-CU terminates the F1 interface connected with the gNB-DU. A gNB-CU may also be referred to herein as a CU, a central unit, a centralized unit, or a control unit.

A gNB Distributed Unit (gNB-DU) includes, e.g., a logical node hosting, e.g., radio link control (RLC), media access control (MAC), and physical (PHY) layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU. A gNB-DU may also be referred to herein as DU or a distributed unit.

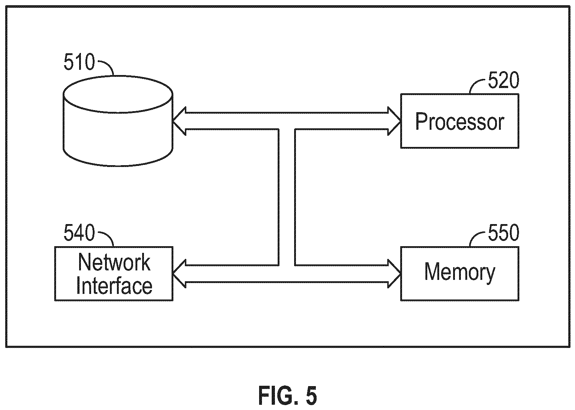

As used herein, the term "network node" may refer to any of a gNB, a gNB-CU, or a gNB-DU, or any combination of them. A RAN (radio access network) node or network node such as, e.g., a gNB, gNB-CU, or gNB-DU, or parts thereof, may be implemented using, e.g., an apparatus with at least one processor and/or at least one memory with processor-readable instructions ("program") configured to support and/or provision and/or process CU and/or DU related functionality and/or features, and/or at least one protocol (sub-)layer of a RAN (radio access network), e.g., layer 2 and/or layer 3. Different functional splits between the central and distributed unit are possible. An example of such an apparatus and components will be described in connection with FIG. 5 below.

The gNB-CU and gNB-DU parts may, e.g., be co-located or physically separated. The gNB-DU may even be split further, e.g., into two parts, e.g., one including processing equipment and one including an antenna. A central unit (CU) may also be called baseband unit/radio equipment controller/cloud-RAN/virtual-RAN (BBU/REC/C-RAN/V-RAN), open-RAN (O-RAN), or part thereof. A distributed unit (DU) may also be called remote radio head/remote radio unit/radio equipment/radio unit (RRH/RRU/RE/RU), or part thereof. Hereinafter, in various example embodiments of the present disclosure, a network node, which supports at least one of central unit functionality or a layer 3 protocol of a radio access network, may be, e.g., a gNB-CU. Similarly, a network node, which supports at least one of distributed unit functionality or a layer 2 protocol of the radio access network, may be, e.g., a gNB-DU.

A gNB-CU may support one or multiple gNB-DUs. A gNB-DU may support one or multiple cells and, thus, could support a serving cell for a user equipment (UE) or support a candidate cell for handover, dual connectivity, and/or carrier aggregation, among other procedures.

The user equipment (UE) 150 may be or include a wireless or mobile device, an apparatus with a radio interface to interact with a RAN (radio access network), a smartphone, an in-vehicle apparatus, an IoT device, or a M2M device, among other types of user equipment. Such UE 150 may include: at least one processor; and at least one memory including program code; where the at least one memory and the computer program code are configured to, with the at least one processor, cause the apparatus at least to perform certain operations, such as, e.g., RRC connection to the RAN. An example of components of a UE will be described in connection with FIG. 5. In embodiments, the UE 150 may be configured to generate a message

(e.g., including a cell ID) to be transmitted via radio towards a RAN (e.g., to reach and communicate with a serving cell). In embodiments, the UE 150 may generate and transmit and receive RRC messages containing one or more RRC PDUs (packet data units). Persons skilled in the art will understand RRC protocol as well as other procedures a UE may perform.

With continuing reference to FIG. 1, in the example of a 5G NR network, the network system 100 provides one or more cells, which define a coverage area of the network system 100. As described above, the network system 100 may include a gNB of a 5G NR network or may include any other apparatus configured to control radio communication and manage radio resources within a cell. As used herein, the term "resource" may refer to radio resources, such as a resource block (RB), a physical resource block (PRB), a radio frame, a subframe, a time slot, a sub-band, a frequency region, a sub-carrier, a beam, etc. In embodiments, the network node 120 may be called a base station.

FIG. 1 provides an example and is merely illustrative of a network system 100 and a UE 150. Persons skilled in the art will understand that the network system 100 includes components not illustrated in FIG. 1 and will understand that other user equipment may be in communication with the network system 100.

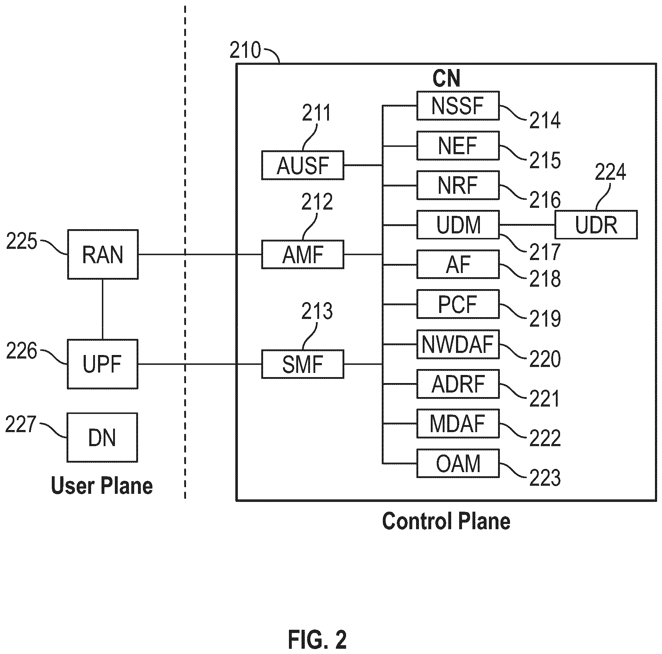

FIG. 2 is a block diagram of example components of the network system 100 of FIG. 1. A 5G NR network may be described as an example of the network system 100, and it is intended that aspects of the following description shall be applicable to other types of network systems, as well. The network system may operate in accordance with the signals and connections shown in FIG. 1 such that the UE 150 is in communication with the network system 100 through the radio access network 225. Additionally, the network system may be divided into user plane components and functions and control plane components and functions, as shown and described herein. Unless indicated otherwise, the terms "component", "function", and "service" may be used interchangeably herein, and they may refer to and be implemented by instructions executed by one or more processors.

Example functions of the components are described below. The example functions are merely illustrative, and it shall be understood that additional operations and functions may be performed by the components described herein. Additionally, the connections between components may be virtual connections over service-based interfaces such that any component may communicate with any other component. In this manner, any component may act as a service "producer," for any other component that is a service "consumer," to provide services for network functions.

For example, a core network 210 is described in the control plane of the network system. The core network 210 may include an authentication server function (AUSF) 211, an access and mobility function (AMF) 212, and a session management function (SMF) 213. The core network 210 may also include a network slice selection function (NSSF) 214, a network exposure function (NEF) 215, a network repository function (NRF) 216, and a unified data management function (UDM) 217, which may include a uniform data repository (UDR) 224.

Additional components and functions of the core network 210 may include an application function 218, policy control function (PCF) 219, network data analytics function (NWDAF) 220, analytics data repository function (ADRF) 221, management data analytics function (MDAF) 222, and operations and management function (OAM) 223.

The user plane includes the UE 150, a radio access network (RAN) 225, a user plane function (UPF) 226, and a data network (DN) 227. The RAN 225 may include one or more components described in connection with FIG. 1, such as one or more network nodes. However,the RAN 225 may not be limited to such components. The UPF 226 provides connection for data being transmitted over the RAN 225. The DN 226 identifies services from service providers, Internet access, and third party services, for example. In various embodiments, the RAN 225 may include a control plane in which a UE may be connected in radio resource control (RRC) states (e.g., connected mode, idle mode, inactive mode). The UE may include a control plane for transitioning between the RRC states.

The AMF 212 processes connection and mobility tasks. The AUSF 211 receives authentication requests from the AMF 212 and interacts with UDM 217 to authenticate and validate network responses for determination of successful authentication. The SMF 213 conducts packet data unit (PDU) session management, as well as manages session context with the UPF 226.

The NSSF 214 may select a network slicing instance (NSI) and determine the allowed network slice selection assistance information (NSSAI). This selection and determination is utilized to set the AMF 212 to provide service to the UE 150. The NEF 215 secures access to network services for third parties to create specialized network services. The NRF 216 acts as a repository to store network functions to allow the functions to register with and discover each other.

The UDM 217 generates authentication vectors for use by the AUSF 211 and ADM 212 and provides user identification handling. The UDM 217 may be connected to the UDR 224 which stores data associated with authentication, applications, or the like. The AF 218 provides application services to a user (e.g., streaming services, etc.). The PCF 219 provides policy control functionality. For example, the PCF 219 may assist in network slicing and mobility management, as well as provide quality of service (QoS) and charging functionality.

The NWDAF 220 collects data (e.g., from the UE 150 and the network system) to perform network analytics and provide insight to functions that utilize the analytics in the providing of services. The ADRF 221 allows the storage, retrieval, and removal of data and analytics by consumers. The MDAF 222 provides additional data analytics services for network functions. The OAM 223 provides provisioning and management processing functions to manage elements in or connected to the network (e.g., UE 150, network nodes, etc.).

FIG. 2 is merely an example of components of a network system, and variations are contemplated to be within the scope of the present disclosure. In embodiments, the network system may include other components not illustrated in FIG. 2. In embodiments, the network system may not include every component illustrated in FIG. 2. In embodiments, the components and connections may be implemented with different connections than those illustrated in FIG. 2. Such and other embodiments are contemplated to be within the scope of the present disclosure.

Although further detail will be provided below, as mentioned above, the UE may be configured for early measurement reporting of idle/inactive mode measurements at RRC connection setup for fast carrier aggregation/dual connectivity (CA/DC) setup purposes. The reporting requirements apply for measurements performed during idle/inactive mode.

When the UE is released to idle or inactive mode from connected mode, the UE may have performed measurements (and reported them) during the connected mode for a cell that the UE is configured to measure when in idle/inactive mode.

In some cases, the UE may stay in idle/inactive mode for a very short time before it receives RRC connection setup message. In this case the UE may not have sufficient time to measure enough samples during idle/inactive mode to be able to report (e.g., meet the reporting accuracy criterion) the measurements at RRC connection setup/resume. The UE may not be required to measure in idle mode as frequently as is required in connected mode. In some cases, this may lead to very long measurement times on the UE side before the UE has performed a suitable amount of measurement samples for reporting. Hence, the UE may not have time in idle/inactive mode to perform a sufficient amount of measurements to meet the reporting criterion, or there may not be any reference signal (RS) to measure before connection setup. Therefore, if only idle/inactive mode measurements are considered, the UE may not be able to report anything at radio resource control (RRC) connection setup.

For example, in Release 16 of the 3GPP specifications, CA/DC early measurement reporting means that the UE is configured to perform measurements in idle/inactive mode to be reported at connection setup to assist in enabling configuration of carrier aggregation/dual connectivity (CA/DC) once the connection is established. Hence, to enable faster carrier aggregation or dual connectivity SCell/PSCell setup once the UE has entered RRC Connected mode. The required measurement time, during which the UE is required to perform the EMR measurements, may be restricted by a timer (e.g., T331) that starts once the UE enters idle/inactive mode. In various embodiments, the UE measurement accuracy requirements may apply only during timer T331.

In various embodiments, the UE may continue the related measurements and indicate their availability to the network after the timer has expired. However, in such scenario the UE measurement accuracy requirements do not apply and no accuracy requirements can be guaranteed for the reported measurements. In Release 18 of the 3GPP specifications, a validity check of the measurements by the UE performed in idle/inactive mode may be performed before reporting these results to the network. The validity check may include that, at RRC connection setup, the UE verifies that the idle/inactive mode measurements it has available are performed within a specified time period X before a first message (msg1) of the RRC connection setup independent of the timer. The first message (msg1) may be the first message of a random access procedure performed on a random access channel (RACH). Additionally, the measurement result may include or indicate the accuracy requirements at the time of measurement. In various embodiments, the time duration X may be a network-configurable value.

When the UE is configured with EMR cell, the cell remains detectable according to the cell detection requirements (e.g., as defined for idleInactiveNR-MeasReport-r16 in 3GPP specification TS 38.133). The cell remains detectable when transitioning from connected to idle mode. In one example, the cell remains detectable means that the UE will keep the UE timing (and measurements) and would for example not need to identify the cells PSS and/or SSS. The UE may, for example, maintain the information on synchronization signal block (SSB) configuration. Hence, in one example it means UE does not need to perform PSS and/or SSS detection. This means that the UE does not need to spend extra time for PSS and/or SSS detection. In an additional example, the cell remains detectable, can also include that the UE does not need to re-acquire the SSB Index.

In various embodiments, when the time in idle mode is short, measurements the UE performed during the RRC-connected mode before entering idle/inactive mode may still be applicable, and if they are valid, the UE could use these for early measurement reporting.

Accordingly, in various embodiments, when a UE is released from RRC connected mode to RRC idle/inactive mode, to enable/clarify reporting of connected mode measurements from time before entering idle/inactive mode at RRC connection setup after idle mode, the UE may store the connected mode measurement results after transitioning from connected mode to idle/inactive mode.

In various embodiments, a counter-based technique may be introduced for the purpose of tracking how long the UE shall store the connected mode measurements after entering idle mode. The counter may be a timer counting time, e.g. periods of an oscillator signal. For example, the time may start to run when the UE enters idle mode and stops running either at a predefined point in time or at UE reporting the measurements at connection setup.

When the time expires during idle mode, the UE is allowed to discard the stored connected mode measurements (or measurement samples which have age more than timer length). In another embodiment, the UE discards, based on a condition becoming fulfilled while the counter is counting, at least some of the stored measurements. The condition may be signal quality of a cell. For example, if the cell is no more detectable by the UE, the UE may discard measurements regarding that cell during the duration counted by the counter.

In various embodiments, storing the measurements may be UE implementation specific.

In various embodiments, when the UE has connected mode measurements stored at the time of connection setup, the UE can either report the stored (connected mode) measurements as a default or based on network request. In various embodiments, the UE may, as a default or based on UE and/or network indication, skip the reporting if the UE already reported the results while still in connected mode.

As used herein, a communication with a radio access network (RAN) may refer to and mean a communication with a portion of a RAN, such as with a network node (e.g., a DU and/or a CU), or another portion of a RAN. As used herein, a communication with a core network may refer to and mean a communication with one or more services/applications of the core network, such as AMF or another service of a core network.

As used herein, the terms "first" and "second", or the like, may refer to a first or second instance of a message being transmitted/received by a component (e.g., UE, apparatus, etc.), or a first or second component in a sequence of described components. As such, the terms are used in a non-limiting manner, and can refer to any message, operation, device, component, or the like.

As mentioned, a UE supporting measurement storing capability may store the connected mode measurements for the cells it measured in connected mode and is also configured to measure in idle mode or inactive mode. In various embodiments, this may apply for all cells/carriers the UE is configured to measure, or it may depend on some further criterion related to e.g. signal quality or UE mobility, or network autonomous selection. For example, in various embodiments relating to network autonomous selection, the selection may be based on whether or not a network is a home network or a roaming network. In various embodiments, the selection may be based upon the frequency range of a frequency band, cell measurement history or UE position related to cell/cells.

The capability can be per-band (e.g., only frequency range 1 (FR1) or FR2, FR2-1 or any future FR), and may include a maximum number of measurement results or carriers for which the UE can store the measurement. In various embodiments, the UE may store the connected mode measurements only for up to Y number of cells, where the cells in Y can be configured by the network, based on UE capacity, defined in the 3GPP specifications or where the one or more can be selected based on any criterion, (e.g. signal quality or mobility based criterion).

In various embodiments, the UE may independently select to either store or discard the connected mode measurements for a cell at transition to idle/inactive mode, and the reporting configuration and requirements may define how to report the results if the UE stored the measurements.

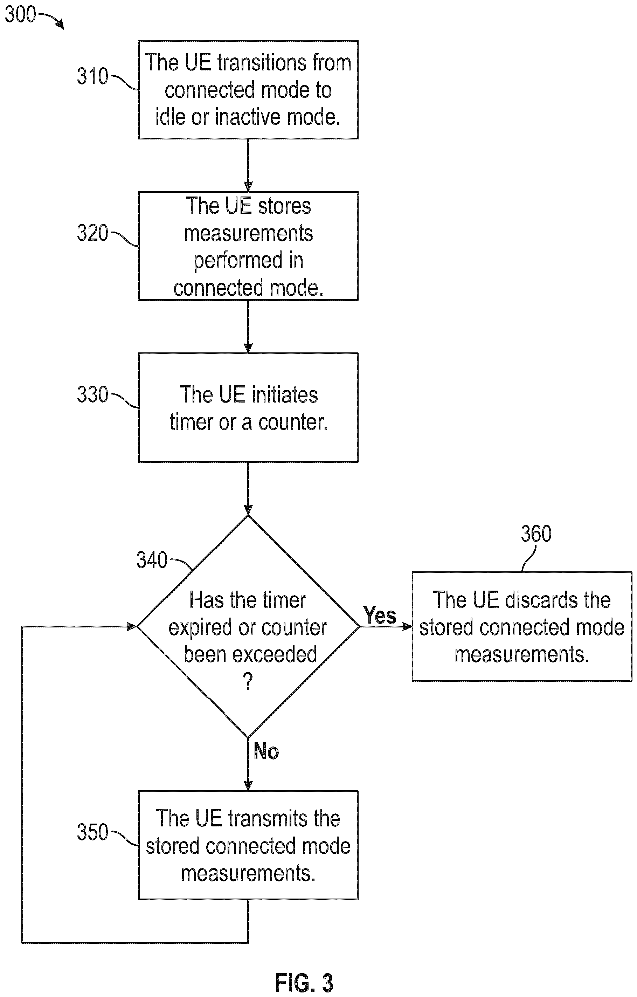

In accordance with the brief description, FIG. 3 is a flow diagram of an example method 300 for early measurement reporting, according to one illustrated aspect of the disclosure.

At block 310, a UE that has been operating in the RRC_Connected mode (e.g., connected mode) transitions from the connected mode to the idle or inactive mode. While the UE was in the connected mode, the UE performs connected mode measurements in accordance with, for example, the 3GPP specifications.

In various embodiments, at block 320, the UE stores the connected mode measurements for a predefined or configured time after entering idle/inactive mode. In the embodiments below, idle mode is mainly used but the same principles apply to the inactive mode as well.

Upon entry into idle mode, the UE initiates a timer or a counter (block 330). In various embodiments, the timer or counter may commence when the UE enters idle mode (e.g., after receiving RRC-Release message) and may stop running either at a defined point in time during idle mode or at an RRC connection setup or reporting instance after RRC connection setup.

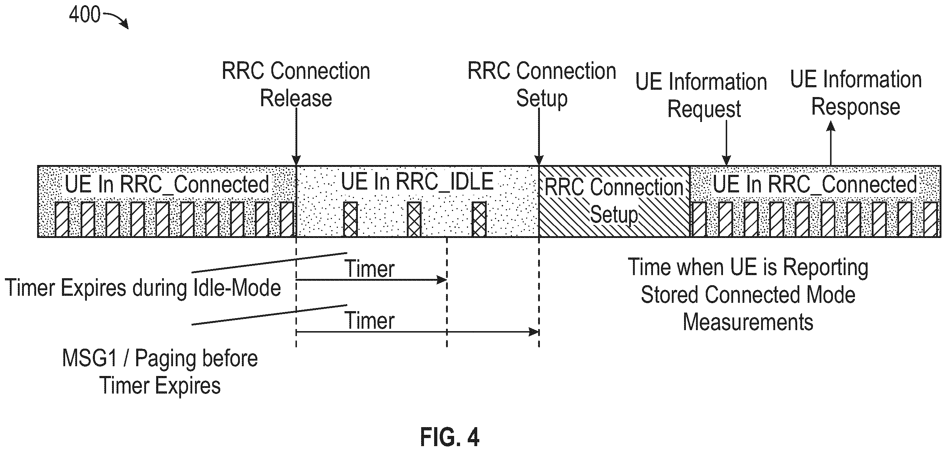

In accordance with the above, FIG. 4 is a diagram of an example time based embodiment 400 of the method 300 of FIG. 3, according to one illustrated aspect of the disclosure. As shown in FIG. 4, the UE is in the RRC_Connected mode and receives an RRC connection release message. At that point the UE transitions into the RRC_Idle mode (or inactive mode). The timer begins upon entry into the idle or inactive mode and may expire after a predefined time in idle mode or upon RRC connection setup (e.g., a message (MSG1 paging message) is received before the timer expires). When the connection setup is complete, the UE may transmit (as described below) an information response based upon an information request being received.

In various embodiments, the timer or counter may be related to the idle mode measurement configuration (e.g., discontinuous reception (DRX) periodicity, number of carriers to measure, etc.) and the applicable measurement requirements. Accordingly, in various embodiments, the UE stores the measurement results obtained in connected mode until a certain reference point in idle/inactive mode is reached related to the performed idle mode measurements. Hence, once the UE has acquired the necessary idle/inactive mode measurement samples or the cell radio conditions change so that it does not make sense to store the measurements anymore, the UE is allowed to discard (as below) the connected mode measurements.

In various embodiments, the measurements may be stored until a first (or two or more first) RS to be measured in idle mode, or more general equal to ≥1 periodicity/periodicities of the RS that the UE is configured to measure during idle mode (e.g. SSB, or other synchronization signal) is reached. In various embodiments, the UE stores the connected mode measurements for a cell until the UE has performed the one or more idle mode measurement samples for that cell. A counter may be used to count the amount of the idle mode measurement samples and, when the counter meets or exceeds a certain value, the connected mode measurements may be discarded.

In various embodiments, the measurements may be stored until one idle mode measurement period for cell(s) to be measured is reached. For example, the UE stores the connected mode measurements for a cell as long as it takes for the UE to acquire enough measurements samples during idle mode to report idle mode measurement results for that cell at RRC connection setup. The timer may be used to measure this time, e.g. the timer may be longer than one idle mode measurement period. The time may or may not include time to detect the cell.

In various embodiments, the UE may store the measurements based on the UE capability to store the measurements and not be related to the measurement configuration. In various embodiments, the time may be directly specified as a requirement in the 3GPP specifications.

In various embodiments, the time the UE stores the measurements may be equal to a specific timer value which equal to, for example, X. The acquired and stored connected mode measurements may be considered as no longer valid after time X. Depending on the definition of X, each sample of the connected mode measurement (or the whole averaged measurement) is stored as long as considered valid (e.g., for the duration of X).

In various embodiments, the time the UE stores the connected mode measurements may also be defined for the UE as a network-configured timer, which the network may dynamically configure (e.g. in the RRC configuration or at RRC connection release). A timer may be predefined and be configurable by RRC signaling. In various embodiments, example timer values may include 1s, 5s, 10s, 50s, 100s, 157s, 200s and 300s. The value may be depending also on the UE mobility status (e.g., stationary, low, medium, high mobility). The timer may have one single value or there may be a set of values from which the network configures one or UE indicates one as a capability.

In various embodiments, the time the UE stores the measurements can be in relation to the T331 timer defined in the 3GPP specifications. For example, the UE may store the measurements up to ½ the expiration time of the T331 timer.

In various embodiments, the time period/timer may depend on the cell and radio conditions, and may be different for different cells/carriers/beams to be measured. For example, the network may configure the timer differently between cells or configure it only for the cells for which it wants the UE to store the measurements.

In various embodiments, the timer or time period for storing the connected mode measurements may be used as an independent measurement validity criterion for reporting, or it may be combined to any further measurement validity criterion and UE validity check.

Accordingly, at block 340, if the timer has not expired or the counter been exceeded, the UE may transmit the stored connected mode measurements to the network (e.g., a network apparatus such as a network node, access node, base station, etc.) at block 350. If, at block 340, the timer has expired or the counter exceeded, the UE may discard the stored connected mode measurements at block 360.In various embodiments, an apparatus or network apparatus may include a network node, access node, and/or a base station.

Accordingly, at block 350, when the UE has measurement results available from connected mode, reporting of these results may be tied together with the timer configuration or time based solution. In various embodiments, several options for reporting/transmitting at RRC connection setup may apply when the timer is still running or time has not elapsed.

In an embodiment, the UE does not employ any counter and transmits the connected mode measurements to the network apparatus when reconnecting to the network.

If the UE did not have time to perform any or a sufficient amount of measurements during idle mode for reporting (depending on timer value), the UE may report the earlier connected mode measurements results according to the reporting configuration. In various embodiments, the UE may not need to report connected mode measurements again if they were reported earlier, and the earlier reported connected mode measurement results that the UE reported before entering idle mode apply as a default (e.g., the network is assumed to store the results in this option until the timer expires). In various embodiments, the network may request the UE to report the results again (e.g., if the network did not store the earlier results).

If the UE performed some measurements during idle mode for the same cell, the UE may report the earlier connected mode measurements in the same measurement report with the idle mode measurements. In various embodiments, if the idle mode measurement results are similar enough to the connected mode measurements the UE stored, connected mode measurements may be considered to still apply (e.g., reporting considers only the connected mode measurements). In various embodiments, a UE indication may be added for the UE to inform the network that the already reported results during previous connected mode apply.

In various embodiments, the reporting behavior may be associated to the timer being expired or not or based on a serving cell change (e.g., the UE is expected to report the measurement when connected to a new serving cell different from the one to which the UE has sent the measurement report). Storing the measurements may also depend on the UE status, for example, the UE is expected to store the measurements when transitioning from the idle-mode to connected mode, but the UE is not expected to store the measurements when transitioning from the inactive-mode to the connected mode. Reporting criterion may also be associated to any other validity criterion.

In various embodiments, measurement accuracy may be considered in the reporting of the measurement values. For example, for measurement accuracy requirements for the measurements reported at RRC connection setup, various options may exist.

In various embodiments, idle mode measurement accuracy is used. For example, the reported measurement results may consist of connected mode measurements, idle mode measurements, or based on samples taken during connected and idle mode. Idle mode measurement accuracy applies independent of the mode during which the samples were taken.

In various embodiments, measurement accuracy may be based on the RRC mode during which the samples were taken. For example, if the UE is reporting only connected mode measurements, connected mode measurement accuracy requirements apply, where, for instance, the UE did not have time to perform idle mode measurements. In various embodiments, if the UE is reporting only idle mode measurements, idle mode measurement accuracy requirements apply. In various embodiments, if the UE is reporting both connected and idle mode measurement results, idle mode measurement accuracy requirements apply. Hence, in various embodiments, if there is at least one measurement performed during the idle-mode, the idle-mode accuracy requirements apply. In various embodiments, the UE may add an indication in the measurement report to indicate whether the measurements are connected mode measurements, idle/inactive mode measurements, or both. The measurement accuracy requirements may apply based on the UE indication.

The blocks/operations of FIG. 3 are merely illustrative, and variations are contemplated to be within the scope of the present disclosure. In embodiments, the operations may include other operations not illustrated in FIG. 3. In embodiments, the operations may not include every operation illustrated in FIG. 3. In embodiments, the operations may be implemented in a different order than that illustrated in FIG. 3. Such and other embodiments are contemplated to be within the scope of the present disclosure. Persons of skill in the art will appreciate that, although various example components are described as performing various functions, other components may perform those functions described in FIG. 3.

In various embodiments, storing the connected mode measurements is up to the UE implementation. In this case the alternatives above may be used, but they are not necessarily related to the timer.

For example, in various embodiments, when storing (for later reporting) the connected mode measurements when entering idle or inactive mode is UE implementation based, the UE may, for example, use signal level based and/or cell type (e.g. serving cell(s) or neighbor cell(s), FR1 or FR2 cell(s)) based criterion to select whether to store the related cell measurement results for a carrier/cell when entering idle mode

In various embodiments, when the UE has connected mode measurement results stored at the time of RRC connection setup, the UE may evaluate whether the stored connected mode measurement results fulfill early measurement reporting criterion (e.g., exceed a threshold) and the UE may select to report the results as early measurement results if criterion is fulfilled.

Additionally, the UE may select to continue storing the measurement results even further until it receives a new connected mode measurement and reporting configuration (e.g., measConfig). If the stored measurement results fulfill reporting criterion as an event trigger condition based on the received measurement configuration, the UE may select to trigger a measurement report to the network. In various embodiments, this may be triggered if the measurement configuration, for example, includes a triggering event for the carrier on which the UE has stored measurement results. Hence, the UE may report the stored results as connected mode measurements based on the stored results instead of reporting measurement only performed after receiving the measurement configuration.

For example, in various embodiments, the UE may perform measurements for a cell on carrier 1 in connected mode, where the cell may be a serving cell or a neighbor cell. The UE may then be released to idle/inactive mode, and perform an internal evaluation on whether to store the connected mode measurement results for the cell on carrier 1.

In various embodiments, the UE may select to store the connected mode measurement results for the cell on carrier 1 for example if measurement results are better than threshold. The threshold may be a configured threshold configured for connected mode measurement reporting criterion (e.g., event A4), idle/inactive mode early measurement reporting criterion (received at connection release), or a UE specific internal threshold. The threshold may be different for serving and neighbor cells, and may be different between frequency ranges.

In various embodiments, the UE may always store measurement results if the cell is a serving cell, whereas if the cell is a neighbor cell, UE may store the results only if the threshold is exceeded.

In various embodiments, the UE stores the measurement results if the cell is a serving cell and threshold is exceeded. In various embodiments the UE stores the measurement results if the UE receives RRC connection setup (or resume) message.

In various embodiments, at the time of early measurement reporting for idle/inactive mode measurements, the UE may select to report the stored connected mode measurement results as idle/inactive mode measurements (if the results fulfill criterion for reporting), and may continue storing the connected mode measurements whether reported or not.

In various embodiments, the UE may store the measurements if the UE receives a connected mode measurement configuration including a measurement object for carrier 1, including measurement report triggering condition (e.g. Event A4: Neighbour becomes better than absolute threshold).

In various embodiments, if the UE has connected mode measurements stored for a cell on carrier 1, the UE may evaluate whether the stored results fulfill reporting criterion according to the new connected mode measurement configuration. If the stored results fulfill the report triggering criterion, the UE may select to use the stored connected mode measurements for connected mode measurement reporting. In various embodiments, the UE may include the stored measurements in the connected mode measurement report.

The following describes operations from the perspective of a UE. From such a perspective, a method may include transitioning, by the UE, from a connected mode to a first cell to an idle mode, The UE determines to store measurements performed by the UE in connected mode of one or more cells based upon a signal level or cell type, and stores for a predefined duration, measurements performed by the UE in connected mode of the one or more cells, upon entering the idle mode. The UE transmits, based on a criterion, during the predefined duration, the stored connected mode measurements of the one or more cells to a first apparatus in connection with connecting to the first apparatus.

Referring now to FIG. 5, there is shown a block diagram of example components of a UE or a network apparatus (e.g., of a RAN or a core network). The apparatus includes an electronic storage 510, a processor 520, a network interface 540, and a memory 550. The various components may be communicatively coupled with each other. The processor 520 may be and may include any type of processor, such as a single-core central processing unit (CPU), a multicore CPU, a microprocessor, a digital signal processor (DSP), a System-on-Chip (SoC), or any other type of processor. The memory 550 may be a volatile type of memory, e.g., RAM, or a non-volatile type of memory, e.g., NAND flash memory. The memory 950 includes processor-readable instructions that are executable by the processor 520 to cause the apparatus to perform various operations, including those mentioned herein, such as the operations of FIGS. 3-4.

The electronic storage 510 may be and include any type of electronic storage used for storing data, such as hard disk drive, solid state drive, optical disc, and/or other non-transitory computer-readable mediums, among other types of electronic storage. The electronic storage 510 stores processor-readable instructions for causing or configured for causing the apparatus to perform its operations and also stores data associated with such operations, such as storing data relating to 5G NR standards, among other data. The network interface 540 may implement wireless networking technologies such as 5G NR and/or other wireless networking technologies.

The components shown in FIG. 5 are merely examples, and persons skilled in the art will understand that an apparatus includes other components not illustrated and may include multiples of any of the illustrated components. Such and other embodiments are contemplated to be within the scope of the present disclosure. For example, a transmitter and a receiver may be included as components for transmitting and receiving signals.

Further embodiments of the present disclosure include the following examples.

Example 1.1. A user equipment (UE), comprising:
means for transitioning from a connected mode to a first cell to an idle mode;
means for determining to store measurements performed in connected mode of one or more cells based upon a signal level or cell type;
means for storing, for a predefined duration, measurements performed by the UE in connected mode of the one or more cells, upon entering the idle mode; and
means for transmitting, based on a criterion, during the predefined duration, the stored connected mode measurements of the one or more cells to a first apparatus in connection with connecting to the first apparatus.

Example 1.2. The UE of example 1.1, wherein the determining includes the UE determining based on the cell type being a serving cell or being a neighbor cell.

Example 1.3. The UE of example 1.1 or 1.2, wherein the determining is based on the frequency range.

Example 1.4. The UE of any one of examples 1.1 to 1.3., wherein the determining includes determining whether the measurements meet or exceed a threshold for early measurement reporting.

Example 1.5. The UE of any one of examples 1.1 to 1.4, wherein the predefined duration includes storing the measurements until receiving a connect mode measurement and reporting configuration.

Example 1.6. The UE of example 1.1, further comprising means for initiating, by the UE, a counter upon entering idle mode or inactive mode.

Example 1.7. The UE of example 1.6, wherein the counter is a timer and upon expiration of the timer or exceeding a counter, maintaining without transmitting, by the UE, the stored connected mode measurements.

Example 1.8. The UE of example 1.7, wherein the timer expires after measuring, by the UE, at least one idle mode measurement or inactive mode measurement for a first cell of the one or more cell.

Example 1.9. The UE of example 1.8, wherein the timer expires after a predefined time configured by the network or included in a message received from the first cell.

Example 1.10. The UE of example 1.8 or 1.9, wherein the timer or counter measures a time that is longer than a period of a reference signal measured by the UE.

Example 1.11. The UE of any one of examples 1.1 to 1.10, further comprising means for discarding, by the UE, the stored connected mode measurements for the first cell.

Example 1.12. The UE of example 1.11, wherein upon a commencement of a radio resource control (RRC) connection setup to the first apparatus while a timer is running, means for transmitting the stored connected mode measurements to the first apparatus.

Example 1.13. The UE of example 1.1, wherein the transmitting of the connected mode measurements of the one or more cells includes transmitting measurements measured during the connected mode following being in idle mode or inactive mode.

Example 1.14. The UE of example 1.13, wherein the transmitting includes transmitting of the connected mode measurements of the one or more cells includes transmitting measurements not previously transmitted.

Example 1.15. The UE as in any one of examples 1.13 or 1.14, wherein the criterion for transmitting of the connected mode measurements of the one or more cells is in response to receiving, by the UE, a request from the first apparatus.

Example 1.16. The UE of example 1.1, further comprising means for transmitting, by the UE, an indication of information on an accuracy of the transmitted connected mode measurements of the one or more cells, wherein the indication indicates a higher accuracy than in a case where the UE transmits idle mode measurements or inactive mode measurements.

Example 1.17. The UE of example 1.1, where the predefined duration applies while one or more predefined conditions are fulfilled.

Example 2.1. An apparatus, comprising:
means for transitioning from a connected mode to a first cell to an idle mode;
means for determining to store measurements performed in connected mode of one or more cells based upon a signal level or cell type;
means for storing, for a predefined duration, measurements performed by the UE in connected mode of the one or more cells, upon entering the idle mode; and
means for transmitting, based on a criterion, during the predefined duration, the stored connected mode measurements of the one or more cells to a first apparatus in connection with connecting to the first apparatus.

Example 2.2. The apparatus of example 2.1, wherein the determining includes the apparatus determining based on the cell type being a serving cell or being a neighbor cell.

Example 2.3. The apparatus of example 2.1 or 2.2, wherein the determining is based on the frequency range.

Example 2.4. The apparatus of any one of examples 2.1 to 2.3., wherein the determining includes determining whether the measurements meet or exceed a threshold for early measurement reporting.

Example 2.5. The apparatus of any one of examples 2.1 to 2.4, wherein the predefined duration includes storing the measurements until receiving a connect mode measurement and reporting configuration.

Example 2.6. The apparatus of example 2.1, further comprising means for initiating, by the apparatus, a counter upon entering idle mode or inactive mode.

Example 2.7. The apparatus of example 2.6, wherein the counter is a timer and upon expiration of the timer or exceeding a counter, maintaining without transmitting, by the apparatus, the stored connected mode measurements.

Example 2.8. The apparatus of example 2.7, wherein the timer expires after measuring, by the apparatus, at least one idle mode measurement or inactive mode measurement for a first cell of the one or more cell.

Example 2.9. The apparatus of example 2.8, wherein the timer expires after a predefined time configured by the network or included in a message received from the first cell.

Example 2.10. The apparatus of example 2.8 or 2.9, wherein the timer or counter measures a time that is longer than a period of a reference signal measured by the apparatus.

Example 2.11. The apparatus of any one of examples 2.1 to 2.10, further comprising means for discarding, by the apparatus, the stored connected mode measurements for the first cell.

Example 2.12. The apparatus of example 2.11, wherein upon a commencement of a radio resource control (RRC) connection setup to the first apparatus while a timer is running, means for transmitting the stored connected mode measurements to the first apparatus.

Example 2.13. The apparatus of example 2.1, wherein the transmitting of the connected mode measurements of the one or more cells includes transmitting measurements measured during the connected mode following being in idle mode or inactive mode.

Example 2.14. The apparatus of example 2.13, wherein the transmitting includes transmitting of the connected mode measurements of the one or more cells includes transmitting measurements not previously transmitted.

Example 2.15. The apparatus as in any one of examples 2.13 or 2.14, wherein the criterion for transmitting of the connected mode measurements of the one or more cells is in response to receiving, by the apparatus, a request from the first apparatus.

Example 2.16. The apparatus of example 2.1, further comprising means for transmitting, by the apparatus, an indication of information on an accuracy of the transmitted connected mode measurements of the one or more cells, wherein the indication indicates a higher accuracy than in a case where the apparatus transmits idle mode measurements or inactive mode measurements.

Example 2.17. The apparatus of example 2.1, where the predefined duration applies while one or more predefined conditions are fulfilled.

The embodiments and aspects disclosed herein are examples of the present disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.

The phrases "in an aspect," "in aspects," "in various aspects," "in some aspects," or "in other aspects" may each refer to one or more of the same or different aspects in accordance with this present disclosure. The phrase "a plurality of" may refer to two or more.

In various embodiments, the terms "first message" and "second message", as well as any subsequent messages may refer to any messages that are transmitted or received in an order and are not necessarily limited to any particular message.

The phrases "in an embodiment," "in embodiments," "in various embodiments," "in some embodiments," or "in other embodiments" may each refer to one or more of the same or different embodiments in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

Any of the herein described methods, programs, algorithms or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While aspects of the present disclosure have been shown in the drawings, it is not intended that the present disclosure be limited thereto, as it is intended that the present disclosure be as broad in scope as the art will allow and that the specification be read likewise. Therefore, the above description should not be construed as limiting, but merely as exemplifications of particular aspects. Those skilled in the art will envision other modifications within the scope and spirit of the claims appended hereto.

## Claims

1. An apparatus (150), comprising:
means for transitioning from a connected mode to a first cell to an idle mode;
means (520) for determining to store measurements performed in connected mode of one or more cells based upon a signal level or cell type;
means (510) for storing, for a predefined duration, measurements performed by the apparatus in connected mode of the one or more cells, upon entering the idle mode; and
means (540) for transmitting, based on a criterion, during the predefined duration, the stored connected mode measurements of the one or more cells to a first apparatus (120) in connection with connecting to the first apparatus (120).

2. The apparatus of claim 2, wherein the determining includes the apparatus determining based on the cell type being a serving cell or being a neighbor cell.

3. The apparatus of claim 1 or 2, wherein the determining is based on the frequency range.

4. The apparatus of any one of claims 1 to 3, wherein the determining includes determining whether the measurements meet or exceed a threshold for early measurement reporting.

5. The apparatus of any one of claims 1 to 4, wherein the predefined duration includes storing the measurements until receiving a connect mode measurement and reporting configuration.

6. The apparatus of claim 1, further comprising means for initiating, by the apparatus, a counter upon entering idle mode or inactive mode.

7. The apparatus of claim 6, wherein the counter is a timer and upon expiration of the timer or exceeding a counter, maintaining without transmitting, by the apparatus, the stored connected mode measurements.

8. The apparatus of claim 7, wherein the timer expires after measuring, by the apparatus, at least one idle mode measurement or inactive mode measurement for a first cell of the one or more cells.

9. The apparatus of claim 8, wherein the timer expires after a predefined time configured by the network or included in a message received from the first cell.

10. The apparatus of claim 8 or 9, wherein the timer or counter measures a time that is longer than a period of a reference signal measured by the apparatus.

11. The apparatus of any one of claims 1 to 10, further comprising means for discarding, by the apparatus, the stored connected mode measurements for the first cell.

12. The apparatus of claim 1, wherein upon a commencement of a radio resource control (RRC) connection setup to the first apparatus while a timer is running, transmitting the stored connected mode measurements to the first apparatus.

13. The apparatus of claim 1, wherein the transmitting of the connected mode measurements of the one or more cells includes transmitting measurements measured during the connected mode following being in idle mode or inactive mode.

14. The apparatus of any preceding claim, wherein the apparatus is a user equipment.

15. A method, comprising:
transitioning, by a user equipment (UE), from a connected mode to a first cell to an idle mode;
determining, by the UE, to store measurements performed by the UE in connected mode of one or more cells based upon a signal level or cell type;
storing, by the UE, for a predefined duration, measurements performed by the UE in connected mode of the one or more cells, upon entering the idle mode; and
transmitting, by the UE, based on a criterion, during the predefined duration, the stored connected mode measurements of the one or more cells to a first apparatus in connection with connecting to the first apparatus.
